# EUROPÄISCHE PATENTANMELDUNG

(11) **EP 0 908 862 A2**
(43) Veröffentlichungstag der Anmeldung: **14.04.1999**
(21) Anmeldenummer: 98119066.3
(22) Anmeldetag: 08.10.1998
(51) Int. Cl.: G08G 1/0962

(54) **Schnittstelleneinrichtung zwischen einem Fahrzeug und einer Auswerteeinrichtung**

(30) Priorität: 10.10.1997 DE 19744750
(71) Anmelder: Miltronik GmbH & Co. KG, 40724 Hilden (DE)
(72) Erfinder: Bücker, Wilhelm, 58256 Ennepetal (DE); Friebe, Rainer, Dipl.-Ing., 40724 Hilden (DE); Kimmerle, Hans-Georg, Dr.-Ing., 44225 Dortmund (DE)
(74) Vertreter: Cohausz & Florack

(57) **Zusammenfassung**

Die Erfindung betrifft eine Schnittstelleneinrichtung für den Datenaustausch zwischen einem Fahrzeug und einer über eine Infrarot-Übertragungsstrecke (4) mit diesem gekoppelten Auswerteeinrichtung (3). Um eine flexible und schnelle Übertragung beliebiger fahrzeugspezifischer Daten zu ermöglichen, ist vorgesehen, daß die Schnittstelleneinrichtung Umsetzungsmittel (2) umfaßt zum Umsetzen der mittels eines Kommunikationsbusses (1) verarbeiteten fahrzeugspezifischen Daten in ein für die Übertragung über die Infrarot-Übertragungsstrecke (4) geeignetes Datenformat.

## Beschreibung

Die Erfindung betrifft eine Schnittstelleneinrichtung für ein Fahrzeugkommunikationssystem, bei dem fahrzeugspezifische Daten über einen CAN-Bus untereinander ausgetauscht werden.

Aus Etschberger et al.: CAN-Netzwerke in verteilten Steuerungssystemen in: Elektronik 26/1991, Seite 42-48 ist ein Fahrzeugkommunikationssystem bekannt, bei welchem die aus unterschiedlichen Quellen im Fahrzeug stammenden, in der Regel über Sensoren erfaßten Fahrzeugdaten, transportiert werden. Das CAN-Kommunikationsnetzwerk verfügt dabei über I/O-Schnittstellen, an denen der Kommunikationsbus mit der Außenwelt in Verbindung tritt. Die Ausgabe der fahrzeugspezifischen Daten über diese I/O-Schnittstelle ist jedoch im Vergleich zur Datengeschwindigkeit innerhalb des CAN-Busses sehr gering.

Eine Schnittstelleneinrichtung für den Datenaustausch zwischen einem Fahrzeug und einer mit diesem gekoppelten Auswerteeinrichtung ist aus der DE 196 18 535 bekannt.

Bei dieser Vorrichtung werden über eine Infrarot-Übertragungsstrecke Daten übertragen zwischen bestimmten Komponenten des Fahrzeugs, beispielsweise des Autoradios, und einer Auswerteeinrichtung, beispielsweise einem Laptop. Hierbei handelt es sich um ein Fahrerinformationssystem, wodurch ermöglicht wird, daß auf einen auf dem Beifahrersitz positionierten Laptop ohne zusätzliche Kabel Datenübertragungen zwischen dem Fahrerinformationssystem und dem Laptop erfolgen kann, da das Infrarotsignal geringe Entfernungen leicht überbrücken kann. Bei dieser bekannten Vorrichtung wird als bidirektionale Schnittstelle eine sogenannte Ir-Da (Infrared Data Association) Bus-Schnittstelle verwendet, wobei diverse Komponenten mit dem Fahrerinformationssystem im Auto über ein Infrarot-Bus-System kommunizieren. Eine solche/r Da Schnittstelle ist aus Optoelektronik F&M 105 (1997), Seiten 138 bis 140, bekannt, welche eine Ir-Da Schnittstelle für Notebooks bzw. Handys beschreibt.

Aus der DE 41 41 387 ist ein Datenübertragungssystem für Kraftfahrzeuge bekannt, bei dem mittels Infrarot-Lichtsignalen kraftfahrzeugspezifische Daten übertragen werden. Auch hierbei erfolgt die Datenübertragung bidirektional. Mehrere Empfänger stehen dabei mit einem zentralen Infrarotempfänger in Verbindung.

Schließlich ist aus der DE 39 02 339 eine Datenerfassungs- und Auswerteanordnung für ein batteriebetriebenes Fahrzeug bekannt, welche einen Batterie-Informationsgeber für Batteriedaten (Lade-/Entladevorgänge) enthält sowie einen auf der Batterie angeordneten, die Batteriedaten aufnehmenden Informationsprozessor und Speicher. Darüber hinaus ist ein Fahrzeuginformationsgeber für nicht batteriespezifische Fahrzeugdaten, beispielsweise Identifikationsdaten sowie Daten über die Einsatzdauer, Einsatzhäufigkeit und Einsatzzeit des Fahrzeugs vorgesehen. Hierdurch wird eine Erfassung von Fahrzeugdaten ermöglicht, da diese in dem Informationsspeicher und Prozessor der Batterie gespeichert werden. Die Übertragung der gespeicherten Daten erfolgt in Verbindung mit einem Ladevorgang für die im Fahrzeug befindliche Batterie. Hierdurch ist die Datenübertragung an bestimmte Vorgabebedingungen geknüpft.

Der Erfindung liegt davon ausgehend die Aufgabe zugrunde, eine Schnittstelleneinrichtung der eingangs genannten Art dahingehend weiterzuentwickeln, daß eine flexible und schnelle Übertragung beliebiger fahrzeugspezifischer Daten ermöglicht wird.

Diese Aufgabe wird erfindungsgemäß dadurch gelöst, daß die Schnittstelleneinrichtung Umsetzungsmittel (2) umfaßt, mittels denen der Kommunikationsbus (1), welcher sämtliche fahrzeugrelevanten Daten ständig verfügbar enthält, direkt über eine Ir-Da-Infrarot-Übertragungsstrecke (4) mit einer externen Auswerteeinrichtung (3) für die Fahrzeugdaten verbunden ist, wobei die Umsetzungsmittel (2) Mittel zur bidirektionalen physikalischen Umsetzung der fahrzeugspezifischen Daten vom Datenformat des Kommunikationsbusses in ein für die Übertragung über die Infrarot-Übertragungsstrecke (4) bzw. umgekehrt geeignetes Datenformat aufweisen.

Die Erfindung zeichnet sich dadurch aus, daß eine Lösung gefunden wurde, mit der der im Fahrzeug vorhandene CAN-Kommunikationsbus mit einer Infrarotübertragungsstrecke, insbesondere nach dem Ir-Da Standard, gekoppelt werden kann. Durch eine solche direkte Kopplung können die mit hoher Geschwindigkeit auf dem CAN-Bus transportierten Daten mit nahezu derselben Geschwindigkeit zu einer extern des Fahrzeugs befindlichen Auswerteeinrichtung durchgeschoben werden.

Bevorzugt ist die Infrarot-Übertragungsstrecke eine Ir-Da- (Infrared Data Association) Übertragungsstrecke.

Eine bevorzugte Ausführungsform der Erfindung sieht vor, daß die Umsetzungsmittel so gestaltet sind, daß eine Umsetzung zwischen einer CAN-Bus/RS485 4-Draht-Kommunikationsleitung und der Infrarot-Übertragungsstrecke Ir-Da ermöglicht wird.

Wenn die Umsetzungsmittel zusätzlich einen entsprechend gestalteten Mikroprozessor aufweisen, läßt sich über die im Mikroprozessor vorgenommene Software-Schnittstellenumsetzung auch eine Ankopplung verschiedener Protokolle auf die Infrarot-Datenübertragungsstrecke ermöglichen.

Ein weiterer Vorteil besteht darin, daß eine gleichzeitige Umsetzung unterschiedlichster Übertragungsgeschwindigkeiten erfolgen kann.

Eine bevorzugte Verwendung findet die erfindungsgemäße Lösung als Kommunikationsschnittstelle zur Übertragung von Fahrzeugdiagnosedaten. Eine andere bevorzugte Verwendung besteht darin, daß die Auswerteeinrichtung als Datenlogger analog zu einem Flugschreiber in Fahrzeugen, Anlagen und Maschinen eingesetzt werden kann.

Weitere Einsatzgebiete ergeben sich als Diagnoseeinrichtung bei Fahrzeugen oder Schiffen sowie für Anlagen- und Maschinensteuerungen sowie im Bereich der Haustechnik.

Die Erfindung wird im folgenden anhand einer Zeichnung näher erläutert. Dabei zeigen:
- Fig. 1: ein Blockschaltbild eines ersten Ausführungsbeispiels der Erfindung,
- Fig. 2: ein Blockschaltbild eines zweiten Ausführungsbeispiels der Erfindung und
- Fig. 3: ein Blockschaltbild eines dritten Ausführungsbeispiels der Erfindung
- Fig. 4: ein Detail-Blockschaltbild für die Schnittstelleneinrichtung nach dem ersten Ausführungsbeispiel
- Fig. 5: ein Detail-Blockschaltbild für die Schnittstelleneinrichtung nach dem zweiten bzw. dritten Ausführungsbeispiel.

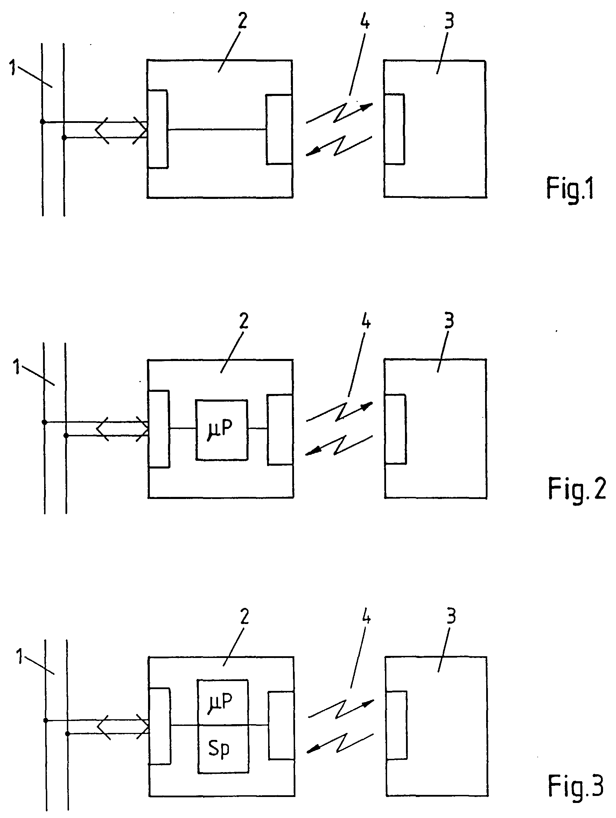

Das in Fig. 1 dargestellte erste Ausführungsbeispiel der Erfindung zeigt einen als CAN-Bus ausgeführten Daten-Kommunikationsbus 1 eines Fahrzeuges. Ein solcher CAN-Bus stellt ein Datenkommunikationsnetzwerk dar, mit dem sämtliche fahrzeugspezifischen Daten untereinander ausgetauscht werden. Diese beinhalten sowohl technische Daten wie auch Identifikationsdaten des Fahrzeuges (z.B. Daten bezüglich der Identität des Halters). Der Kommunikationsbus 1 ist über eine Schnittstelleneinrichtung 2 und eine Infrarot-Datenübertragungsstrecke 4 mit einer Auswerteeinrichtung 3 verbunden. Die Datenübertragung über die Infrarot-Übertragungsstrecke 4 erfolgt bevorzugt über das Protokoll Ir-Da- (Infrared Data Association).

Die Schnittstelleneinrichtung 2 beinhaltet die Umsetzung der CAN-Busdaten auf die für die Infrarot-Datenübertragungsstrecke 4 erforderliche Standardisierung.

Die in Fig. 1 dargestellte erste Ausführungsform der Erfindung beinhaltet den Umsetzer 2 als Modul zur Umsetzung von der Norm RS485 im 2- oder 4-Drahtbetrieb des CAN-Busses auf die Ir-Da-Norm als reine physikalische Umsetzung.

Das in Fig. 2 dargestellte Ausführungsbeispiel unterscheidet sich von demjenigen, welches in Fig. 1 dargestellt wurde, dadurch, daß der Schnittstellenumsetzer 2 zusätzlich einen Mikroprozessor µP aufweist, in dem eine Übersetzung unterschiedlicher RS485- 2/4 Protokolle, beispielsweise des CAN-Bus-Protokolls auf das Ir-Da-Protokoll erfolgt. Hierdurch werden die Daten nicht nur, wie in Fig. 1 dargestellt wurde, 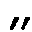 durchgeschoben" sondern entsprechend des geforderten Protokolls umgesetzt.

Das in Fig. 3 dargestellte dritte Ausführungsbeispiel der Erfindung unterscheidet sich von demjenigen, das in Fig. 2 dargestellt wurde, dadurch, daß der Mikroprozessor µP zusätzlich noch einen erweiterten Speicher Sp enthält. Hierbei kann es sich um einen internen, d.h. im Mikroprozessor integrierten oder um einen externen Datenspeicher handeln. Dieser dient zur Erfassung und zur Speicherung sowie der Ausgabe von Betriebsdaten, Störmeldungen oder weiteren Informationsdaten des Kraftfahrzeuges.

Insbesondere mit der Gestaltung, wie sie in der Fig. 3 dargestellt wurde, läßt sich ein ausfallsicheres Bus-Überwachungssystem im Sinne eines Datenloggers ( 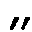 Flugschreibers") realisieren. Andere Anwendungsbereiche der erfindungsgemäßen Lösung finden sich im Kraftfahrzeugs-, Schiffs-, Flugzeug- oder Anlagen- und Maschinensteuerungsbereich sowie im Bereich der Haustechnik.

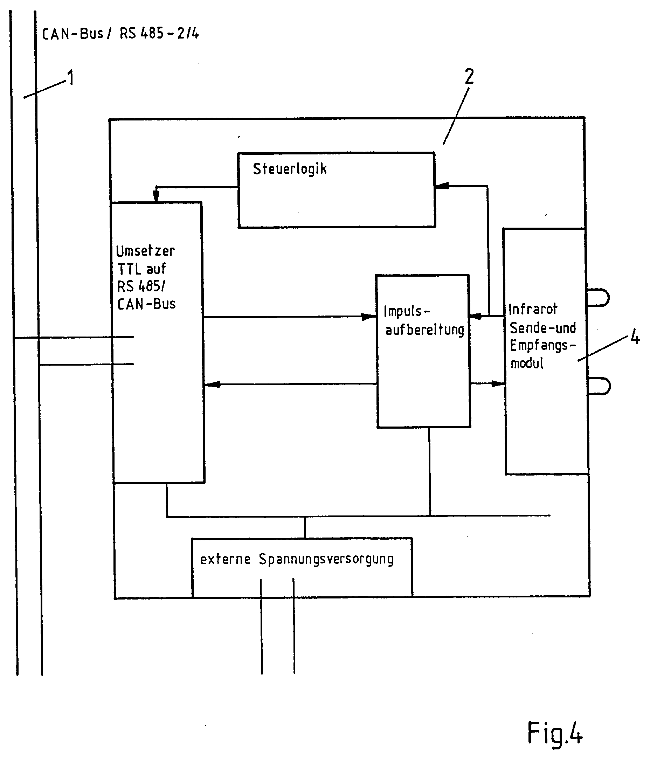

Fig. 4 zeigt ein Detail-Blockschaltbild zum ersten Ausführungsbeispiel der Erfindung nach Fig. 1:

Der Daten-Kommunikationsbus (CAN-Bus/ RS485-2/4) ist eingangsseitig des Schnittstellenumsetzers 2 mit einer TTL-Umsetzereinheit verbunden, in der die Daten des CAN-Busses mittels TTL-Logik verarbeitet werden. Die so umgesetzten Daten gelangen über eine Impuls-Aufbereitungsstufe auf ein Infrarot-Sende-und Empfangsmodul, welches auf der Infrarot-Datenübertragungsstrecke 4 arbeitet.

In umgekehrter Weise gelangen die vom Empfangsmodul der Infrarot-Sende- und Empfangsmoduleinheit empfangenen Daten über die Impuls-Aufbereitungsstufe auf den TTL-Umsetzer und von dort auf den Kommunikationsbus 1.

Die entsprechende Umschaltung zwischen Sende- und Empfangseinrichtung erfolgt vermittels einer Steuerlogik. Die Betriebsspannung wird über eine externe Spannungsversorgung zugeführt.

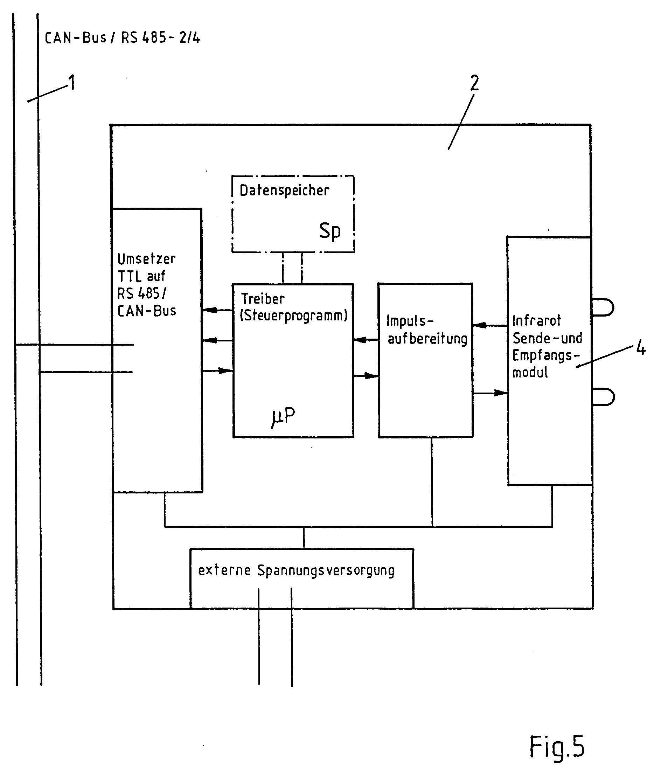

Das in Fig. 5 dargestellte zweite Detail-Blockschaltbild zeigt den Aufbau des Schnittstellenumsetzers 2 für das zweite bzw. dritte Ausführungsbeispiel gemäß den Figuren 2 bzw. 3.

Zusätzlich zu den bereits im Zusammenhang mit Fig. 4 beschriebenen Blöcken befindet sich zwischen dem TTL-Umsetzer und der Impuls-Aufbereitungsstufe ein Mikroprozessor. Dieser Mikroprozessor enthält das Steuerprogramm zur Umsetzung der vom CAN-Bus empfangenen bzw. auf Basis RS485- 2/4 übertragenen Daten auf das Infrarot-Protokoll, speziell Ir-Da. Gemäß drittem Ausführungsbeispiel der Erfindung ist der Mikroprozessor mit einem Datenspeicher Sp gekoppelt. Bei der Ausführungsform nach Fig. 5 kann auf die Hardware-Steuerlogik gemäß Fig. 4 verzichtet werden, da diese softwaremäßig realisiert ist.

## Patentansprüche

1. Schnittstelleneinrichtung für ein Fahrzeug-Kommunikationssystem, bei dem fahrzeugspezifische Daten über einen CAN-Bus untereinander ausgetauscht werden,
**dadurch gekennzeichnet**, daß
die Schnittstelleneinrichtung Umsetzungsmittel (2) umfaßt, mittels denen der Kommunikationsbus (1), welcher sämtliche fahrzeugrelevanten Daten ständig verfügbar enthält, direkt über eine Infrarot-Übertragungsstrecke (4) mit einer externen Auswerteeinrichtung (3) für die Fahrzeugdaten verbunden ist, wobei die Umsetzungsmittel (2) Mittel zur bidirektionalen physikalischen Umsetzung der fahrzeugspezifischen Daten vom Datenformat des Kommunikationsbusses in ein für die Übertragung über die Infrarot-Übertragungsstrecke (4) bzw. umgekehrt geeignetes Datenformat aufweisen.

2. Schnittstelleneinrichtung nach Anspruch 1,
**dadurch gekennzeichnet**, daß die Infrarot-Übertragungsstrecke eine Ir-Da-Übertragungsstrecke ist.

3. Schnittstelleneinrichtung nach einem der vorhergehenden Ansprüche,
**dadurch gekennzeichnet**, daß die Umsetzungsmittel zur physikalischen Umsetzung des RS422-4-Draht-Standards auf die Infrarot-Übertragungsstrecke (4) geeignet sind.

4. Schnittstelleneinrichtung nach einem der vorhergehenden Ansprüche,
**dadurch gekennzeichnet**, daß die Umsetzungsmittel einen Mikroprozessor (µP) zur Übersetzung des CAN-Bus-Protokolls auf das IR-Protokoll beinhalten.

5. Schnittstelleneinrichtung nach Anspruch 4,
**dadurch gekennzeichnet**, daß die Umsetzungsmittel zur Umsetzung des RS485 2-Draht-Standards auf die Infrarot-Übertragungsstrecke (4) geeignet sind.

6. Schnittstelleneinrichtung nach Anspruch 4 oder 5,
**dadurch gekennzeichnet**, daß der Mikroprozessor (µP) einen Datenspeicher (Sp) enthält.

7. Schnittstelleneinrichtung nach einem der vorhergehenden Ansprüche,
**dadurch gekennzeichnet**, daß das Fahrzeug ein PKW ist.

8. Schnittstelleneinrichtung nach einem der vorhergehenden Ansprüche 1 bis 7,
**dadurch gekennzeichnet**, daß das Fahrzeug ein Sonderfahrzeug oder ein Nutzfahrzeug (LKW) ist.

9. Verwendung einer Schnittstelleneinrichtung nach einem der vorhergehenden Ansprüche 1 bis 6 als Datenlogger analog zu einem Flugschreiber.

10. Verwendung einer Schnittstelleneinrichtung nach einem der vorhergehenden Ansprüche 1 bis 6 als Diagnose-Einrichtung für Maschinen oder Fahrzeuge.

11. Verwendung einer Schnittstelleneinrichtung nach einem der vorhergehenden Ansprüche 1 bis 6 als Diagnose-Einrichtung im Bereich der Haustechnik.
